# EUROPEAN PATENT APPLICATION

(11) **EP 4 765 756 A1**
(43) Date of publication of application: **24.06.2026**
(21) Application number: 24383437.1
(22) Date of filing: 20.12.2024
(51) Int. Cl.: H04L 43/0894, H04L 41/40, H04L 9/40, H04L 43/10, H04L 41/342, H04L 43/20

(54) **METHOD, SYSTEM AND COMPUTER PROGRAM FOR SECURELY AND EFFICIENTLY MEASURING AVAILABLE BANDWIDTH OF NETWORK PATHS OF AN SDN-BASED NETWORK**

(71) Applicant: Telefonica Innovacion Digital SL, 28050 Madrid (ES)
(72) Inventor: Marin, Eduard, 28050 Madrid (ES)
(74) Representative: Carlos Hernando, Borja

(57) **Abstract**

A method, system and computer programs for securely and efficiently measuring available bandwidth of network paths of an SDN-based network are proposed. The network comprises an SDN controller and a plurality of programmable network devices. The method comprises including a bandwidth monitoring element on the SDN controller and/or on the plurality of programmable network devices of the SDN-based network; executing, by one of the bandwidth monitoring elements, within a measurement round, a real-time available bandwidth measurement of a network path between any two of the plurality of programmable devices by embedding a security mechanism into the probing packets shared between the two programmable network devices based on a data plane protocol relying on cryptographic methods and measuring the available bandwidth of the network path by considering reception time-based information of the probing packets using a single clock.

## Description

### TECHNICAL FIELD

The present invention relates to bandwidth measuring methods. In particular, the invention relates to a method, system and computer program for securely and efficiently measuring available bandwidth of network paths of a Software Defined Network (SDN)-based network, particularly, where all or a subset of its networking devices are programmable.

### BACKGROUND OF THE INVENTION

Bandwidth is a critical metric underpinning numerous network applications, including routing, traffic engineering, congestion control, quality-of-service (QoS) management, service-level agreement compliance, and security defence, such as detecting Link Flooding Attacks. Network operators rely on bandwidth measurements to plan upgrades, ensuring that network capacity meets application and service demands while avoiding excessive costs from over-provisioning or severe congestion from under-provisioning. However, accurately and efficiently measuring bandwidth in real time remains challenging, prompting Internet Service Providers (ISPs) to frequently over-provision resources to maintain QoS requirements.

Bandwidth metrics fall into two primary categories: capacity and available bandwidth. Capacity represents the maximum data transfer rate over a link without loss, while available bandwidth denotes the unused portion of that capacity at a given moment. Accurate measurement of available bandwidth is vital for network applications and protocols. For instance, algorithms like Dijkstra's, used to calculate shortest paths, can use available bandwidth as a "link cost" metric. Manipulating these measurements could allow adversaries to influence routing decisions, bypass security mechanisms, or launch Man-in-the-Middle (MITM) attacks, such as ARP poisoning or DNS spoofing, with potentially severe consequences.

Over the past decade, researchers have proposed several techniques to measure bandwidth. These solutions can be broadly classified into three categories: host-based methods, approaches leveraging SDNs, and techniques utilizing programmable network devices like P4 switches.
- Host-based solutions to measure bandwidth. Host-based techniques for measuring available bandwidth fall into the following two categories based on their methodology:
   - Probe Gap Tools: Tools like *Spruce* [1], *Traceband* [2], and *IGI* [3] use packet pairs as probes. They measure bandwidth by analysing the time gap between the arrival of two probes at the receiver.
   - Probe Rate Tools: Tools such as *PathLoad* [4] and *PathChirp* [5] inject multiple series of packets at varying rates. These tools aim to induce temporary congestion, causing increased delay due to probe packets queuing at the bottleneck router. The resulting delay variations are then used to estimate the available bandwidth.

The problem of these solutions is that they make unrealistic assumptions that can result in inaccurate bandwidth measurements in real-world scenarios [1]. For instance, these methods typically presume that routers implement FIFO (First-In, First-Out) queuing, that cross-traffic is much smaller in size than probing packets, and that cross-traffic rates remain relatively constant during measurements. Furthermore, because these solutions are implemented on end-hosts, their applicability is inherently limited. Note that in many cases network operators do not have control over end-hosts, making the deployment of these solutions impractical.
- Bandwidth measurements in the SDN era. The emergence of SDNs introduced new possibilities for monitoring bandwidth-related network metrics. These approaches typically utilize the SDN controller to estimate bandwidth by gathering flow statistics from switches or through active probing.
   - Flow Statistics-Based Methods: Tools such as *OpenNetMon* [6], *FlowSense* [7], and the solution by *Pakzad et al.* [8] leverage the SDN controller to collect data such as the number of bytes transferred, flow duration, and other flow-level metrics. These statistics are then analysed to infer the available bandwidth of a link.
   - Probing-Based Methods: The SDN controller can direct switches to inject artificially created probing packets. For example, a source switch sends packets to a destination switch, which estimates the bandwidth by analysing the differences in arrival times of the packets.

Despite their utility, these methods face some limitations. Some works (e.g., [10, 11]) have found discrepancies in the flow statistics reported by SDN switches, including inaccuracies in packet and byte counters as well as in flow durations. Additionally, SDN switches cannot timestamp packets themselves, an operation needed to estimate available bandwidth. Due to this, they must redirect packets to the SDN controller for such operations, negatively impacting accuracy. Another critical limitation arises from the heavy reliance on the SDN controller. Many solutions require the SDN controller to query flow statistics from all switches in the network, which imposes substantial communication overhead, computational strain and increased calculation times. While techniques like FlowCover [12] and OpenTM [13] attempt to mitigate this by limiting the number of queried switches, the overall resource consumption remains significant. These issues raise concerns about scalability, as a sudden spike in SDN controller resource usage could cause failures that jeopardize the entire network's stability.
- Bandwidth measurements with programmable data planes. To date, *Capest* [9] is the only proposed solution that offloads bandwidth measurements directly to network devices. Leveraging advances in programmable data planes, *Capest* uses a per-hop, passive measurement method based on packet dispersion and auto-correlation techniques to measure link capacity. It then estimates available bandwidth by combining the capacity measurement with packet length and timestamp information.

Despite the efforts of the authors, Capest has several important weaknesses. Firstly, it relies on packet dispersion, a technique prone to errors caused by cross-traffic and effective only if certain assumptions are met (e.g., it depends on the queuing strategy used at routers). While the method tries to address this by collecting numerous dispersion samples and applying filtering techniques to remove outliers, this increases both overhead and the time required to estimate bandwidth. Moreover, these filtering and analysis techniques are computationally intensive, and their effectiveness under realistic network conditions remains unproven. It is important to note that the authors leave the concerns around probing packet generation out of the scope of their paper. However, as shown by Dovrolis et al. [14], the way probing packets are generated is crucial for the correct functioning of this type of method.

Beyond the category-specific limitations previously introduced, existing bandwidth measurement solutions share two critical shortcomings. The first is the inability to effectively balance accuracy and efficiency. Active measurement methods, while highly precise, rely on the injection of numerous probing packets, which incurs significant overhead and risks disrupting network performance. Conversely, passive measurement methods are lightweight and less intrusive but often lack the precision required. Secondly, current solutions lack a security-oriented design. Specifically, they assume that all networking devices are trustworthy and fail to account for network-level adversaries capable of eavesdropping, modifying or injecting packets into network links.

Current bandwidth measurement solutions lack built-in security mechanisms and implicitly trust the measurements or calculations performed by switches. This assumption has been repeatedly shown to be unrealistic in practice. Numerous studies have demonstrated that various types of network switches -- traditional switches [15], SDN-enabled switches [16, 17], and programmable P4 switches [18] -- can be compromised in multiple ways. Furthermore, as network operators adopt more complex P4 programs and new compilers emerge to support additional P4 targets, the likelihood of vulnerabilities in network devices is expected to increase even more [19].

The threat posed by adversaries in the data plane is compounded by the growing scale and complexity of modern networks. As the number of users, applications, and services grows, so too do the incentives for malicious actors to exploit these systems. Recent revelations have highlighted incidents of governmental agencies and other entities engaging in sophisticated operations, including network eavesdropping through tapping internal and intercontinental links and physical tampering by inserting rogue devices into networks to eavesdrop or manipulate traffic [20, 21, 22]. Such examples underscore the necessity of addressing the potential presence of network-level adversaries who can observe, modify and inject traffic into internal network links.

On the other hand, recent advancements in programmable networking hardware have revolutionized the potential of data plane applications, enabling a wide range of functionality to be implemented directly within the data plane (i.e., on the routers themselves). These applications span critical domains such as security and privacy [23, 24], scheduling [25], failure detection and recovery [26, 27], network coding [28] or network monitoring 29], to name a few.

### DESCRIPTION OF THE INVENTION

According to one aspect, present invention provides a method for securely and efficiently measuring available bandwidth of network paths of an SDN-based network, which comprises a SDN controller and a plurality of programmable network devices, such as programmable switches or SmartNICs supporting P4. The communication channel between the SDN controller and the programmable network devices adopts a Transport Layer Security (TLS) protocol.

The method comprises: including a bandwidth monitoring element on the SDN controller and/or on at least one of the plurality of programmable network devices of the SDN-based network; executing, by one of the bandwidth monitoring elements, within a measurement round, a real-time available bandwidth measurement of a given network path between any two of the plurality of programmable devices by embedding a security mechanism into the probing packets (i.e. measurement packets) shared between the two programmable network devices based on a data plane protocol relying on cryptographic methods; and measuring, in a local control plane of one of the two programmable network devices or in a global control plane (e.g., in the SDN controller), the available bandwidth of the given network path by considering reception time-based information of the probing packets sent using a single clock.

In some embodiments, artificially created probing packets are injected into the given network path if the (real) probing packets are insufficient for the available bandwidth measurement.

In some embodiments, the probing packets, i.e. real packets, artificially created packets, or a combination thereof, are signaled/marked with a given mark. When real probing packets are used, the marks are removed before the packets are forwarded to their destination. When artificially created probing packets are used, they are discarded at the destination programmable network device.

Particularly, in the proposed method, the data plane protocol relies on a cryptographic Message Authentication Code (MAC) function.

In some embodiments, the cryptographic MAC function is based on the Chaskey algorithm. Nevertheless, in other embodiments, any secure, standard MAC function that can be executed within a single pass through the pipeline of the programmable network devices can be used.

In some embodiments, the method further computes a unique MAC for each probing packet sent within a measurement round.

In some embodiments, the cryptographic MAC function is computed offload from a processing unit of one of the two programmable network devices.

In some embodiments, the bandwidth monitoring element that executes the real-time available bandwidth measurement is included in a receiver programmable network device of the two programmable network devices, the other programmable network device acting as sender programmable device. Additionally, the sender programmable network device and the receiver programmable network device share a symmetric cryptographic key that is only known by them. Likewise, the sender programmable network device includes several headers to each probing packet sent, the several headers comprising: (i) a Nround, (ii) a Npacket, (iii) a programmable network device ID, and (iv) a MAC tag indicating a result of having computed a cryptographic MAC function using the cryptographic key shared over the packet's payload, Nround, Npacket and programmable network device ID. The execution of a measurement round in this case comprises: upon reception of each probing packet, verifying that Nround is greater than a value from a previous real-time available bandwidth measurement round and that Npacket is greater than the last received probing packet, using the programmable network device ID for identifying the shared cryptographic key, and validating the MAC tag using the shared cryptographic key; and upon successful validation, recording the reception time-based information of the probing packets, and once the measurement round is completed further forwarding the recorded reception time-based information to the local control plane for carrying out the measurement of the available bandwidth, wherein the receiver programmable network device further transmits the measured available bandwidth to the sender programmable network device using the shared cryptographic key.

Please note that these methods can be executed periodically, on the occurrence of certain events or on-demand with each protocol execution representing a new measurement round.

In some embodiments, the bandwidth monitoring element that executes the real-time available bandwidth measurement is included in a sender programmable network device of the two programmable network devices, the other programmable network device acting as receiver programmable device. Additionally, the sender programmable network device and the receiver programmable network device share a cryptographic key that is only known by them. Likewise, the sender programmable network device includes several headers to each probing packet sent, the several headers comprising: (i) a Nround, (ii) a Npacket, (iii) a programmable network device ID, and (iv) a MAC tag indicating a result of having computed a cryptographic MAC function using the cryptographic key shared over the packet's payload, Nround, Npacket and programmable network device ID. The execution of the measurement round in this case comprises: sending a challenge to the receiver programmable network device, the challenge enforcing the receiver programmable network device to perform a cryptographic operation on the challenge using the shared cryptographic key; receiving a response to said challenge from the receiver programmable network device; upon successful validation of the authenticity of the response, recording the reception time-based information of the probing packets for further processing in the local control plane.

In some embodiments, the bandwidth monitoring element that executes the real-time available bandwidth measurement is included in the SDN controller. Moreover, a sender programmable network device of the two programmable network devices and a receiver programmable network device of the two programmable network devices each possess a cryptographic key, that is only shared with the SDN controller. In this case, the execution of the measurement round comprises: sending a measurement process initiating request to the sender programmable network device, and further receiving confirmation from the sender programmable network device; forwarding a plurality of parameters including a cryptographic seed for initializing a deterministic packet generation process and a PacketCount for specifying the number of probing packets to be generated and transmitted within the measurement round to the sender programmable network device, wherein the sender programmable network device upon reception of the plurality of parameters forwards the probing packets with several headers attached thereto to the receiver programmable device, the several headers comprising: (i) a Nround, (ii) a Npacket, (iii) a programmable network device ID, and (iv) a MAC tag indicating a result of having computed a cryptographic MAC function using the cryptographic key, Nround, Npacket and programmable network device ID; receiving, from the receiver programmable network device, for each probing packet the receiver programmable network device has received from the sender programmable network device, the Nround, Npacket, and result of the cryptographic MAC function; extracting the reception time-based information of each probing packet and validating integrity and authenticity of each probing packet using the MAC tag and the cryptographic key of the sender programmable network device.

Present invention also provides, according to another aspect, a system for securely and efficiently measuring available bandwidth of network path of an SDN-based network. The system comprises a plurality of programmable network devices (e.g. P4-programmable switches or SmartNICs, among others); a SDN controller configured to communicate with the plurality of programmable network devices using a TLS protocol; and a bandwidth monitoring element disposed on the SDN controller or on one of the plurality of programmable network devices.

In the proposed system, the bandwidth monitoring element is configured to execute, within a measurement round, a real-time available bandwidth measurement of a given network path between two of the plurality of programmable devices by embedding a security mechanism into the probing packets shared between the two programmable network devices based on a data plane protocol relying on cryptographic methods; and measuring, in a local control plane of one of the two programmable network devices or in a global control plane (i.e., the SDN controller), the available bandwidth of the given network path by considering reception time-based information of the probing packets using a single clock.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Thus, the present invention provides an innovative in-network bandwidth monitoring solution, operating directly on network devices, to measure the available bandwidth of network paths without requiring control over end-hosts.

Operating almost entirely within the data plane, the present invention leverages the unique capabilities of programmable network devices to deliver highly accurate measurements while minimizing network overhead. By prioritizing the use of real traffic as probing packets and injecting artificially created probing packets only, when necessary, the present invention strikes a balance between accuracy, efficiency, and minimal disruption to normal network operations. Its robust cryptographic protections ensure the integrity of the measurement process and provide strong defences against security attacks, addressing a critical need often overlooked in existing solutions.

Furthermore, present invention's adaptability to varying trust models allows network operators to dynamically select and deploy the most suitable method embodiment, enabling a customizable balance between security, performance, and complexity. This flexibility enhances its practical utility across networks with diverse security requirements and hardware capabilities. By addressing the challenges of secure, real-time, and efficient bandwidth measurements, the present invention provides accurate, tamper-resistant insights into network bandwidth usage, empowering network operators to make informed decisions for many applications and services.

The present invention offers several technical advantages over state-of-the-art solutions:
- Enhanced security: Unlike existing solutions, which generally lack inherent security mechanisms, this invention integrates robust cryptographic protections directly into the design. These measures ensure the integrity and authenticity of bandwidth measurements, effectively safeguarding the system from adversaries seeking to manipulate or compromise the bandwidth measurement process.
- Adaptability to varying device trust models: The invention provides network operators with the ability to dynamically select the most suitable method embodiment based on the trustworthiness of the network devices or the specific operational setting. This adaptability ensures the system remains flexible, secure, and efficient across diverse scenarios and varying security requirements.
- High efficiency with high accuracy: The invention achieves an optimal balance between operational efficiency and measurement accuracy. Unlike existing solutions, which either incur significant overhead to deliver accurate results or trade off precision for lightweight operation, this system provides precise available bandwidth measurements with minimal impact on network performance and resources.
- Real-time bandwidth measurements: In contrast to most solutions that rely heavily on end-hosts or SDN controllers, the proposed invention operates predominantly within programmable network devices configured using P4. This in-network approach enables real-time bandwidth measurements, making the system highly responsive and suitable for modern, dynamic network environments.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 schematically illustrates the different elements of the proposed system, according to an embodiment. S3-S6 represent switches or other intermediate devices along the path where the available bandwidth is to be measured.
Fig. 2 schematically illustrates a first embodiment of the proposed method, in which both programmable network devices are trusted.
Fig. 3 schematically illustrates a second embodiment of the proposed method, in which only one of the programmable network devices is assumed trusted, while the other is considered malicious.
Fig. 4 schematically illustrates a third embodiment of the proposed method. In this case, both network devices are assumed to be malicious. Available bandwidth measurements are performed by the SDN controller (which is trusted).

### DETAILED DESCRIPTION OF THE INVENTION AND OF PREFERRED EMBODIMENTS

The present invention provides an in-network bandwidth monitoring solution designed to measure the available bandwidth of network paths. The invention assumes that the capacity of network links is already known and focusses only on measuring available bandwidth of network paths (which is constantly changing).

Present invention is implemented on an SDN-based network that is managed by a single administrative authority. As in typical real-world SDN deployments, the network's control plane is logically centralized and implemented through a cluster of SDN controllers (e.g., a primary controller and multiple replicas to ensure high availability). The data plane, on the other hand, comprises programmable networking devices configured using P4.

Furthermore, it bases its design on programmable network devices, as these devices offer high performance and are fully programmable, making it possible to develop the invention (almost) entirely in the data plane. In some particular embodiments, programmable switches are used, not limitative, as other network devices supporting P4, such as SmartNICs, can be equally used; thus, offering additional flexibility in various network environments that contain different P4 hardware targets.

Current programmable switches are typically composed of a general-purpose CPU, which acts as the local control plane, and an ASIC programmable in P4, which constitutes the data plane. Such programmable switches allow network operators to define custom packet processing behaviours using P4, a domain-specific programming language for networking. P4's protocol and target independence enable the design of flexible, reusable programs that can be compiled to multiple targets. One of the most widely adopted architectures for programmable switches is the Protocol Independent Switch Architecture (PISA). PISA employs a pipeline-based design for high-speed packet processing. This architecture is optimized for line-rate processing at terabit speeds, ensuring that all operations are completed within the fixed time budget of each pipeline stage. Incoming packets at an ingress port are first parsed to extract their headers, which are then processed through a series of stages populated with Match-Action Tables (MATs). Each stage is equipped with Arithmetic Logic Units (ALUs) capable of performing basic operations like arithmetic calculations, header modifications, and Boolean logic. Packets are matched against rules in the MATs, and corresponding actions are executed upon a match. After traversing all stages, packets are de-parsed and forwarded through the egress port.

The primary goal of adversaries is to trick the SDN controller into believing that the available bandwidth of a given network link/path is greater than it is. To achieve this, adversaries can eavesdrop on internal network paths and inject malicious packets to tamper with the bandwidth measurement process. They can execute their attacks by taking control of end-hosts, internal network paths, or, in some scenarios, the programmable network devices themselves. The present invention considers three distinct scenarios based on different levels of trust in the programmable network devices involved in the bandwidth measurement process. In a first embodiment, it is assumed that both programmable network devices are fully trusted. In a second embodiment, the invention explores a scenario where one of the two programmable network devices may be malicious while the other remains trusted. Finally, the invention adopts a zero-trust security model, relaxing all previous assumptions and treating both programmable network devices involved in the measurement as untrusted. The SDN controller remains trusted in all scenarios.

The present invention does not offer any protection against attacks in which adversaries attempt to convince the SDN controller that the available bandwidth of a path is lower than its actual value. Although such attacks could cause security attacks, addressing them is left for future work. The invention assumes several conditions for the network. Particularly, the communication channel between the SDN controller and the programmable network devices is assumed to be secure, supported by the use of TLS in OpenFlow, the de facto standard Southbound protocol in SDN. Additionally, all paths between programmable network devices are considered to be full duplex, ensuring bidirectional communication. Finally, it is assumed that the programmable network devices that are malicious do not share their cryptographic keys with other network devices (e.g., other switches). Revealing these keys would expose their collusion and compromise their ability to execute stealthy attacks, which are often critical to achieving adversarial objectives

The invention's design is guided by the following principles. It primarily utilizes real traffic as probing packets for bandwidth measurements, resorting to artificially created probing packets only when necessary. This approach aims to achieve high accuracy while maintaining low overhead. It also incorporates robust security mechanisms to protect against adversarial tampering, ensuring the integrity of the bandwidth measurement process. Similarly, it offers a versatile solution capable of measuring the available bandwidth between any two programmable network devices, addressing the need for bandwidth measurements across a wide range of targets and network scenarios. Finally, by leveraging the capabilities of programmable data-plane devices, the invention operates in real-time, delivering timely and accurate measurements.

In the following, the main challenges associated with performing in-network measurements of available bandwidth on network paths are addressed.
- Challenges with accuracy: Achieving line-rate processing at Terabit speeds in the data plane imposes significant constraints on the types of operations that can be performed on programmable switches. Packets must spend a fixed amount of time in each pipeline stage, typically just a few nanoseconds. As a result, only operations that can be executed in constant time, such as basic arithmetic, are supported - complex computations like multiplications or floating-point operations are not supported. Furthermore, each action in a Match-Action Table (MAT) is limited to a small set of simple operations. In addition to computational constraints, programmable switch ASICs have limited amounts of high-speed memory, such as TCAM and SRAM. Moreover, access to this memory is highly restricted: registers in one stage cannot be accessed by others, and memory operations are typically limited to a single read and/or write per stage. These limitations create challenges in designing accurate and resource-efficient bandwidth measurement methods.

To address these challenges, the present invention is designed through an iterative process that started with "ideal" methods optimized for accuracy and security. These methods were subsequently adapted to accommodate the constraints of current programmable network devices, ensuring they could be executed within a single pipeline pass to maintain network throughput while minimizing resource consumption. The present invention achieves greater accuracy by maintaining full control over the traffic used for bandwidth measurements. This allows for precise measurements that are not influenced by external factors. Additionally, the present invention can employ stateful registers to count the number of probing packets received, avoiding the inaccuracies of OpenFlow counters. It also leverages the metadata available in P4 to generate precise time-based information (e.g. timestamps) upon packet arrival, eliminating the need to redirect packets to the SDN controller for timestamping. Together, these techniques enable the present invention to provide highly accurate bandwidth measurements despite the inherent limitations of programmable data-plane devices.
- Challenges with security: The present invention introduces a family of data plane methods/protocols designed to securely measure the available bandwidth of network paths under varying switch trust models. The security of these methods relies on cryptographic MAC (Message Authentication Code) tags appended to probing packets, ensuring source authentication and protecting the integrity of the measurement process against tampering attempts. As a result, enabling efficient and secure MAC operations directly on programmable switches becomes a critical requirement for the present invention.

While it would be ideal to implement cryptographic algorithms directly in P4 to perform cryptographic operations at Terabit speeds on every probing packet, several constraints-such as limited computational capabilities and restricted memory access-make this an extremely challenging task. Due to these limitations, only a few studies have explored the implementation of cryptographic operations in the data plane. Two notable examples are *PINOT* [30] and *SPINE* [31]. However, both exhibit significant weaknesses upon closer analysis. In *PINOT,* the authors reordered the building blocks of the Even-Mansour cryptographic algorithm to fit it into a single pass through the Tofino pipeline, but they did not evaluate the security implications of this modification. Similarly, *SPINE* used SipHash but reduced the number of rounds from the recommended six to three, significantly weakening the security of the implementation and leaving it vulnerable to attacks.

Fortunately, these challenges have been recently addressed by a paper that introduces the first P4 implementation of a secure and efficient cryptographic MAC function (based on the Chaskey algorithm) [32]. This implementation is carefully designed to fit within a single pass of the Tofino 2 pipeline, overcoming prior limitations while ensuring robust security. Within the present invention, two possible approaches for integrating the required cryptographic functionality into the proposed methods are envisioned:
1. P4-based implementation (i.e., cryptographic functionality integrated into the data plane): This approach leverages the P4 implementation of Chaskey to compute a unique MAC for every probing packet sent within a measurement round. This method ensures high security and high performance since each probing packet has a unique MAC (thus, avoiding replay attacks) and the cryptographic functionality is fully integrated within the data plane.
2. Switch CPU-Based Implementation: In this approach, the MAC computation is offloaded to the switch's CPU rather than the switch's ASIC. This requires communication between the data plane and the control plane of the programmable network device, introducing a small but non-negligible round-trip delay due to the PCle interface between the ASIC and the CPU [33]. To maintain performance under these constraints, MAC operations are limited to a single computation (or a very small subset of probing packets) per measurement round. While this method reduces computational overhead, it has implications for security, as the same MAC is reused across all probing packets within a measurement round. This reuse introduces a slight vulnerability to replay attacks. However, the risk is mitigated by ensuring that the MAC is updated with every new measurement round, maintaining a reasonable balance between performance and security.

- Challenges in performance: Both active and passive measurement methods offer distinct advantages and disadvantages. Active methods are generally faster and more accurate but require the injection of artificially created probing packets, which can contribute to network congestion. In contrast, passive methods are less intrusive, as they rely on observing existing traffic. However, they typically require large volumes of data to analyse, often using complex algorithms, which can limit their practicality. Ideally, a measurement method would combine the accuracy and speed of active methods with the low resource consumption and non-intrusiveness of passive methods. Leveraging the capabilities of programmable data planes, the present invention provides a solution that combines the accuracy of active methods with the minimal network disruption of passive methods. By default, the present invention performs bandwidth measurements using only normal traffic, resorting to injecting artificially created probing packets only when the real traffic traversing the path is insufficient for the measurement. To minimize the impact of artificially created probing packets on the network, the present invention can signal/mark these packets, enabling the destination device to distinguish them from real traffic and discard them immediately after the measurement is completed.

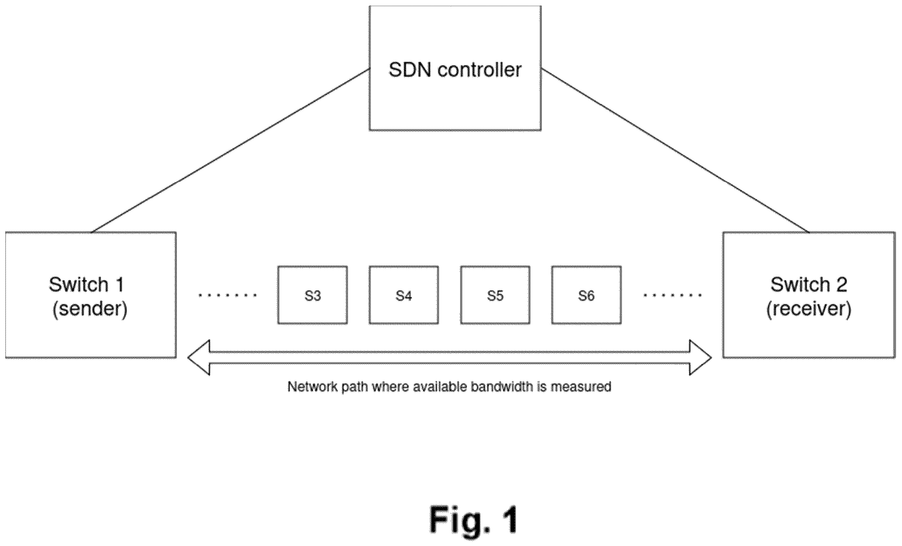

In the following, the three methods/protocols that form the core of the present invention are detailed, enabling two programmable network devices to securely measure the available bandwidth of a network path (see Fig 1). Each method is tailored to a specific trust model. The central intuition behind these methods is to embed security mechanisms directly into the probing packets exchanged during a measurement round. This ensures that even if an adversary controls some network devices, any attempts to compromise the bandwidth measurements can be detected. Furthermore, the present invention prioritizes the use of real traffic for measurements whenever possible, reducing reliance on artificially created probing packets. This approach significantly enhances the security and efficiency of available bandwidth measurements. By implementing these processes within programmable network devices, the present invention also supports real-time bandwidth measurement capabilities.

The present invention is agnostic to the specific algorithm used in the control plane to estimate available bandwidth. These algorithms typically depend on time-based information, and the present invention provides a secure and efficient method to collect this critical data, ensuring compatibility with a wide range of estimation techniques.

The present invention relies on simple cryptographic primitives and methods to defend against various security attacks while maintaining speed and efficiency. Moreover, the processes are designed to be executed in a single pass through the programmable network devices pipeline, eliminating the need for packet recirculation and ensuring high performance. Furthermore, they operate almost entirely within the data plane, utilizing the local control plane only for running the algorithm to estimate available bandwidth from time-based information. This minimizes reliance on the SDN controller, reducing its vulnerability to DoS attacks. Additionally, the use of real traffic for bandwidth measurements is prioritized wherever possible to reduce network congestion from artificially created probing packets. Finally, the processes are designed to compute bandwidth measurements using a single clock, thereby avoiding the clock synchronization issues associated with timestamps from multiple programmable network devices.

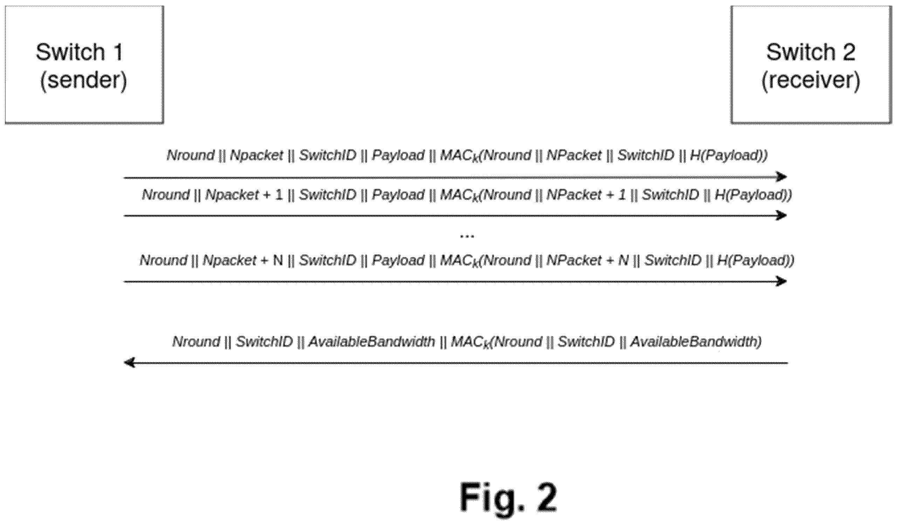

With reference now to Fig. 2, therein a first embodiment of the proposed method for allowing secure bandwidth measurements when both programmable network devices, particularly, switches, are trusted, is illustrated. This method achieves authentic bandwidth measurements of a network path between two switches that are assumed to be trusted. More concretely, the method provides data integrity (i.e., it guarantees that information has not been altered by adversaries) and entity authentication (i.e., it allows each switch to prove its identity to the other securely). To achieve this, it is assumed that both switches share a cryptographic key that is only known to them. The way how the switches establish this shared key is out of the scope of this patent. However, within the security community this is a well understood problem for which there are already many solutions available. One possible solution would be, for example, to use the SDN controller as a key distribution or key translation centre [26].

Consider two switches, SWITCH 1 (acting as the sender) and SWITCH 2 (acting as the receiver), that aim to execute the method for measuring the available bandwidth of the network path between them. This method assumes that the receiver switch employs an algorithm capable of estimating available bandwidth based on inter-packet arrival times measured at the receiver. The steps involved in a single instance (or measurement round) are outlined below and shown in Fig. 2.

During a measurement round, probing packets sent from SWITCH 1 to SWITCH 2 may consist of real packets, artificially-crafted packets, or a combination of the two, depending on the volume of normal traffic being handled by *SWITCH 1* at the start of the bandwidth measurement. If real probing packets are used, *SWITCH 1* modifies the packets on the fly, appending the required headers, as explained below. These headers are subsequently stripped by *SWITCH 2,* ensuring that the bandwidth measurement process remains fully transparent to end-users. When artificially created probing packets are used, the method utilizes the capabilities of programmable switches to generate probing packets using their internal mechanisms. These mechanisms include traffic generator functionality, duplicating and recirculating real packets, or applying similar techniques.

Regardless of the type of probing packet used, to ensure the security properties described above, each probing packet sent from *SWITCH 1* to *SWITCH 2* includes four additional headers: (i) *Nround,* (ii) *Npacket,* (iii) *SwitchID,* (iv) the result of computing a cryptographic MAC function using the K both switches share over the packet's payload, Nround, Npacket and SwitchlD. NRound is a counter incremented by one at the end of each measurement round, preventing replay attacks across rounds. Within a measurement round, NPacket is another counter incremented by one for each transmitted probing packet, providing additional freshness and probing packet tracking. The method is designed to avoid the need for strict synchronization between switches; the receiver (SWITCH 2) accepts probing packets if their counters contain values higher than the previously observed ones. SwitchID serves as a unique identifier for the sender switch (SWITCH 1). Together, these headers secure the measurement process, making it robust against tampering and replay attacks.

Upon receiving each probing packet, SWITCH 2 verifies that NRound and NPacket are greater than the values from the previous round and the last received measurement probing packet, respectively. Using SwitchlD, SWITCH 2 identifies the appropriate cryptographic key (K) and then validates the MAC tag appended to the probing packet, ensuring data authenticity and integrity. If the probing packet is successfully verified, SWITCH 2 records its arrival time-based information (i.e. its timestamp). Once the measurement round is complete, SWITCH 2 forwards the collected timestamps to its local control plane, which processes them to estimate the available bandwidth. Given that both switches trust each other in this scenario, SWITCH 2 can securely transmit the measured bandwidth value to SWITCH 1 using their shared cryptographic key. Since bandwidth measurements are typically not confidential but require integrity, SWITCH 2 sends a message to SWITCH 1 containing NRound, SwitchID, the measured bandwidth, and a MAC tag computed over these values. This guarantees the integrity and authenticity of the message. Finally, SWITCH 1 and SWITCH 2 increment NRound to prepare for the next measurement round.

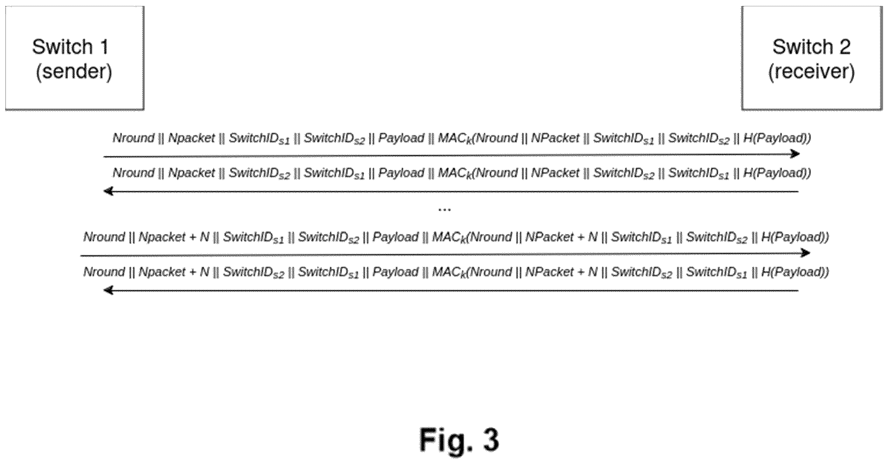

With reference to Fig. 3, this figure illustrates another embodiment of the present invention for allowing secure bandwidth measurements. In this case, the method is implemented when only one of the programmable network devices is trusted.

The security of the first embodiment relies on the assumption that both switches are trusted and execute the method as intended. If one of the switches is malicious, it could report a bandwidth value higher than what was measured, thereby compromising the integrity of the bandwidth measurement process. At first glance, this issue might seem solvable by running the method twice (once in each direction) and enabling both switches to independently measure the available bandwidth of the network path and share their results with the SDN controller (assumed to be trusted). The SDN controller could then select the smaller of the two reported values, mitigating attempts by a malicious switch to overstate the path's performance.

However, this approach is not viable for several reasons. First, it does not support real-time bandwidth measurements performed directly on the data plane, which is a core objective of the proposed solution. Second, it imposes significant overhead on the SDN controller, which must process and reconcile measurements from both switches, potentially impacting scalability. Finally, modifications to the method would be necessary, as the first embodiment uses a shared cryptographic key between the two switches to authenticate messages. In a scenario where one switch is malicious, this shared key cannot be trusted for secure authentication, leaving the method vulnerable to tampering. To address these challenges, this second embodiment is proposed, which ensures security even if one of the switches acts maliciously.

From a security perspective, one key threat of this second embodiment is SWITCH 2's potential to claim it received measurement probing packets earlier than it did. By doing so, SWITCH 2 could artificially create the illusion of greater available bandwidth along the network path, thereby undermining the method's security guarantees and compromising the integrity of the measurement process.

Given that SWITCH 2 is not trusted, the sender switch (SWITCH 1) assumes responsibility for performing the time-based measurements. While this shift in responsibility may slightly reduce the method's accuracy, designing a solution that functions reliably in the presence of potentially malicious switches poses a very challenging task. One plausible attack strategy for SWITCH 2 involves sending a premature reply to SWITCH 1 before receiving the measurement probing packet from SWITCH 1. This way, SWITCH 2 could artificially lower the observed inter-packet times, leading to a false perception of higher available bandwidth along the path.

To counter this type of attack, the method integrates robust security mechanisms within each probing packet. These mechanisms ensure that SWITCH 2 cannot generate a valid response (referred to as the "proof") without first receiving the corresponding probing packet (the "challenge") from SWITCH 1. Specifically, the response generated by SWITCH 2 must depend on the content of the received challenge, making it computationally infeasible for SWITCH 2 to fabricate a valid proof prematurely. This ensures the integrity and reliability of the measurement process, even in the presence of a malicious SWITCH 2.

The response generated by SWITCH 2 must depend on the challenge sent by SWITCH 1, enforced by requiring SWITCH 2 to perform a cryptographic operation (e.g., a MAC) on the challenge using the cryptographic key it shares with SWITCH 1. Upon receiving SWITCH 2's responses, SWITCH 1 validates their authenticity by verifying the cryptographic proof. If the responses are deemed valid, SWITCH 1 extracts and stores the associated timestamps for further processing in the (local) control plane. This approach leverages the constant processing time in programmable switches and the fact that all extracted timestamps are reliably extracted relative to the sender switch (SWITCH 1). Although this mechanism may introduce a slight reduction in accuracy, it provides a robust defence against compromised switches attempting to falsify bandwidth measurements. Scalability and performance are maintained through efficient challenge-response exchanges and hardware-accelerated cryptographic operations performed directly in the data plane.

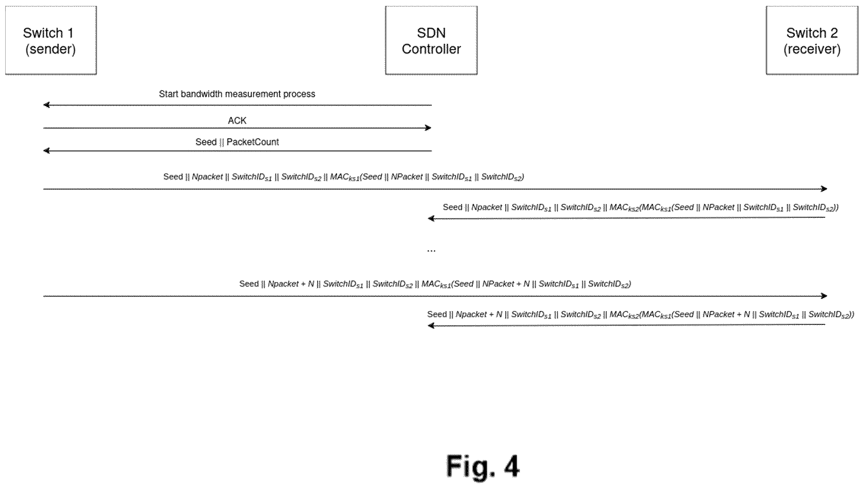

Finally, in Fig. 4, the third embodiment is illustrated. In this case, the present invention provides similar security guarantees for measuring bandwidth between two untrusted programmable network devices with the help of the SDN controller that is assumed to be trusted.

In recent years, the zero-trust security model has gained significant attention, emphasizing the principle of never trusting any network device by default without first performing proper verification. Inspired by this concept, the third embodiment of the proposed method enables the SDN controller to securely determine the available bandwidth of a network path between two untrusted programmable network devices (e.g. switches). Unlike previous embodiments, where the SDN controller played no role in the bandwidth measurement process, this embodiment requires the SDN controller to take a central role in overseeing and managing the measurement process.

Given that both switches in this scenario are potentially malicious, the method cannot rely on them to provide accurate time-based information. Instead, they must be captured by the SDN controller immediately upon receiving data from the switches. Another key challenge lies in ensuring that the SDN controller retains complete control over the probing packets transmitted by SWITCH 1 to SWITCH 2. These probing packets must be recognizable, verifiable and consistent with the SDN controller's instructions, yet remain random and unpredictable to SWITCH 2. This is critical to the method's security; without it, malicious switches could prematurely execute the method without obtaining the corresponding payloads from SWITCH 1. The SDN controller can achieve this by leveraging a cryptographically secure algorithm, such as a pseudorandom function (PRF), a hash-based scheme, or a similar secure and standard cryptographic algorithm, to bootstrap and synchronize the packet generation process at SWITCH 1.

Implementing this method in real-world SDN networks presents several significant challenges, with one of the most critical being the limited bandwidth of SDN controller-switch communication channels. These constraints necessitate efficient communication while ensuring that the method maintains its security guarantees. It is infeasible to generate all probing packets at the SDN controller and transmit them to the sender switch (SWITCH 1). Likewise, transmitting packets received at the receiver switch (SWITCH 2) back to the SDN controller for processing would result in excessive overhead. A practical solution involves delegating probing packet generation to SWITCH 1 by having the SDN controller send only a small amount of data to the switch -- such a cryptographic Seed for initializing a deterministic packet generation process and a PacketCount for specifying the number of probing packets to be generated and transmitted within a round.

The third embodiment of the proposed method operates as follows: The SDN controller begins the bandwidth measurement process by sending a request to SWITCH 1 to initiate the method. Upon receiving this request, SWITCH 1 confirms its readiness by returning an acknowledgment message to the SDN controller. Following this, the SDN controller provides SWITCH 1 with two key parameters: a fresh Seed and a PacketCount. The probing packets generated through these parameters are then secured using the same cryptographic mechanisms and headers as in previous embodiments. However, in this scenario, the receiver switch (SWITCH 2) does not verify the probing packets; instead, all validation, including timestamp validation and cryptographic verification, is deferred to the SDN controller.

To minimize the data transmitted over the control channel, SWITCH 2 does not forward the entire received probing packets to the SDN controller. Instead, for each probing packet, SWITCH 2 extracts and forwards the NRound, PacketCount, and the corresponding packet's MAC tag computed by SWITCH 1. This is sufficient for validation at the SDN controller and reduces the bandwidth burden on the control channel (Note that SWITCH 2 is implicitly authenticated to the SDN controller by sending data through its control channel with the SDN controller). Upon receiving this data, the SDN controller performs two critical functions: (1) it extracts a timestamp for the probing packet arrival and (2) it validates the integrity and authenticity of the probing packet using the provided MAC tag and the shared cryptographic key with SWITCH 1.

To implement this method, SWITCH 1 and SWITCH 2 must each possess a unique cryptographic key (KS1 for SWITCH 1 and KS2 for SWITCH 2), known exclusively to the respective switches and the SDN controller. Although SWITCH 1 and SWITCH 2 may collude to carry out attacks (e.g., by exchanging information), it is assumed that they will not share their unique keys with each other. Revealing these keys would expose their collusion and compromise their ability to execute stealthy attacks, which are often critical to achieving adversarial objectives. To counter potential attacks, particularly by SWITCH 2, the method incorporates several robust security mechanisms.

One key aspect of the method is that the measurement packets depend on KS1, a cryptographic key unknown to SWITCH 2, ensuring that SWITCH 2 cannot fabricate responses without first receiving the complete set of packets from SWITCH 1. This mechanism effectively prevents time-shortening attacks, where SWITCH 2 might falsely claim it received all packets in a shorter time to create the illusion of higher available bandwidth. The method requires SWITCH 2 to compute cryptographic proofs over the probing packets it receives, ensuring that any response from SWITCH 2 accurately reflects legitimate probing packet reception.

The SDN controller plays a central role in this process, providing the initial information and validating the cryptographic proofs and timestamps received from SWITCH 2 to estimate the available bandwidth. Additionally, the SDN controller compares timestamps from all probing packets to detect anomalies, such as irregular probing packet arrival patterns that could indicate tampering or delays caused by SWITCH 2. This indirect measurement approach provides a strong guarantee of integrity and security, even in the face of untrusted switches. By integrating these measures, the method achieves a delicate balance between efficiency, security, and scalability, making it well-suited for deployment in zero-trust SDN environments where trust cannot be assumed by default.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

### References

[1] Jacob Strauss, Dina Katabi, and Frans Kaashoek. A Measurement Study of Available Bandwidth Estimation Tools. In Proceedings of the ACM SIGCOMM Conference on Internet Measurement (IMC 2003). pp. 39-44.
[2] Cesar D. Guerrero and Miguel A. Labrador. Traceband: A fast, low overhead and accurate tool for available bandwidth estimation and monitoring. Computer Networks 54, 6 (2010), pp. 977-990.
[3] Ningning Hu and P. Steenkiste. Evaluation and characterization of available bandwidth probing techniques. IEEE Journal on Selected Areas in Communications 21, 6 (2003), 879-894.
[4] Manish Jain and Constantine Dovrolis. Pathload: A Measurement Tool for End-to-End Available Bandwidth. Proceedings of Passive and Active Measurement Workshop (PAM 2002).
[5] Vinay Ribeiro, Rudolf Riedi, Jiri Navrátil, and Les Cottrell. pathChirp: Efficient Available Bandwidth Estimation for Network Paths. Proceedings of Passive and Active Measurement Workshop (PAM 2003).
[6] Niels LM Van Adrichem, Christian Doerr, and Fernando A Kuipers. Opennetmon: Network monitoring in openflow software-defined networks. In 2014 IEEE Network Operations and Management Symposium (NOMS 2014). IEEE, 1-8.
[7] Curtis Yu, Cristian Lumezanu, Yueping Zhang, Vishal Singh, Guofei Jiang, and Harsha V. Madhyastha. FlowSense: Monitoring Network Utilization with Zero Measurement Cost. In Proceedings of Passive and Active Measurement Workshop (PAM 2013). pp. 31-41.
[8] Farzaneh Pakzad, Marius Portmann, and Jared Hayward. Link capacity estimation in wireless software defined networks. In Proceedings of International Telecommunication Networks and Applications Conference (ITNAC 2015). pp. 208-213.
[9] Nicolas Silveira Kagami, Roberto Irajá Tavares da Costa Filho, and Luciano Paschoal Gaspary. Capest: Offloading network capacity and available bandwidth estimation to programmable data planes. IEEE Transactions on Network and Service Management 17, 1 (2019), 175-189.
[10] Luuk Hendriks, Ricardo de Oliveira Schmidt, Ramin Sadre, Jeronimo Bezerra, and Aiko Pras. Assessing the Quality of Flow Measurements from OpenFlow Devices. In Proceedings of Network Traffic Measurement and Analysis Conference (TMA 2016).
[11] Manmeet Singh, Nitin Varyani, Jobanpreet Singh, and K. Haribabu. Estimation of End-to-End Available Bandwidth and Link Capacity in SDN. In Ubiquitous Communications and Network Computing 2018, Navin Kumar and Arpita Thakre (Eds.). pp. 130-141.
[12] Zhiyang Su, Ting Wang, Yu Xia, and Mounir Hamdi. FlowCover: Low-cost flow monitoring scheme in software defined networks. In Proceedings of IEEE Global Communications Conference (GLOBECOM 2014). pp. 1956-1961.
[13] Amin Tootoonchian, Monia Ghobadi, and Yashar Ganjali. OpenTM: Traffic Matrix Estimator for OpenFlow Networks. In Proceedings of Passive and Active Measurement Workshop (PAM 2010), Arvind Krishnamurthy and Bernhard Plattner (Eds.). pp. 201-210.
[14] C. Dovrolis, P. Ramanathan, and D. Moore. What do packet dispersion techniques measure? In Proceedings of IEEE International Conference on Computer Communications (INFOCOM 2001), Vol. 2. pp. 905-914.
[15] 2017. CVE-2017-3881: Cisco Catalyst Remote Code Execution. https://nvd. nist. gov/vuln/detail/CVE-2017-3881
[16] 2016. CVE-2016-2074: Open vSwitch Buffer Overflow. https://nvd.nist.gov/vuln/detail/CVE-2016-2074
[17] Kashyap Thimmaraju, Bhargava Shastry, Tobias Fiebig, Felicitas Hetzelt, Jean-Pierre Seifert, Anja Feldmann, and Stefan Schmid. Taking Control of SDN-Based Cloud Systems via the Data Plane. In Proceedings of the Symposium on SDN Research (SOSR 2018).
[18] Pietro Bressana, Noa Zilberman, and Robert Soulé. Finding Hard-to-Find Data Plane Bugs with a PTA. In Proceedings of International Conference on Emerging Networking EXperiments and Technologies (CoNEXT 2020). pp 218-231
[19] Fabian Ruffy, Tao Wang, and Anirudh Sivaraman. Gauntlet: Finding Bugs in Compilers for Programmable Packet Processing. In Proceedings of USENIX Symposium on Operating Systems Design and Implementation (OSDI 2020). pp. 683-699
[20] 2015. Snowden Urges Cloud Providers to Take Action Against Mass Surveillance. https://www.datacenterknowledge.com/archives/2015/03/25/snowden-urges-cloud-providers-take-action-mass-surveillance
[21] 2022. The Atlantic. The creepy, long-standing practice of undersea cable tapping. https://wwwtheatlantic.com/international/archive/2013/07/the-creepy-long-standing-practice-of-undersea-cable-Tapping/277855/.
[22] Alfred Arouna, Steinar Bjørnstad, Stein Jørgen Ryan, Thomas Dreibholz, Sobia Rind, and Ahmed Elmokashfi. Network Path Integrity Verification using Deterministic Delay Measurements. In Proceedings of Network Traffic Measurement and Analysis Conference (TMA 2022).
[23] Albert Gran Alcoz, Martin Strohmeier, Vincent Lenders, and Laurent Vanbever. Aggregate-Based Congestion Control for Pulse-Wave DDoS Defense. In Proceedings of the Conference on Applications, Technologies, Architectures, and Protocols for Computer Communication (SIGCOMM 2022).
[24] Roland Meier, Petar Tsankov, Vincent Lenders, Laurent Vanbever, and Martin Vechev. NetHide: Secure and Practical Network Topology Obfuscation. In Proceedings of the USENIX Conference on Security Symposium (USENIX 2018).
[25] Albert Gran Alcoz, Alexander Dietmüller, and Laurent Vanbever. SP-PIFO: Approximating Push-In First-Out Behaviors using Strict Priority Queues. In Proceedings of USENIX Symposium on Networked Systems Design and Implementation (NSDI 2020). pp. 59-76.
[26] Edgar Costa Molero, Stefano Vissicchio, and Laurent Vanbever. FAst In-Network GraY Failure Detection for ISPs. In Proceedings of Conference on Applications, Technologies, Architectures, and Protocols for Computer Communication (SIGCOMM 2022).
[27] Thomas Holterbach, Edgar Costa Molero, Maria Apostolaki, Alberto Dainotti, Stefano Vissicchio, and Laurent Vanbever. Blink: Fast Connectivity Recovery Entirely in the Data Plane. In Proceedings of USENIX Symposium on Networked Systems Design and Implementation (NSDI 2019). pp. 161-176.
[28] Diogo Gonçalves, Salvatore Signorello, Fernando Ramos, and Muriel Médard. Random Linear Network Coding on Programmable Switches. In ACM/IEEE Symposium on Architectures for Networking and Communications Systems (ANCS 2019). pp. 1-6.
[29] Gonçalo Matos, Salvatore Signorello, and Fernando M. V. Ramos. Generic Change Detection (Almost Entirely) in the Dataplane. In Proceedings of the Symposium on Architectures for Networking and Communications Systems (ACNS 2022). pp. 113-120.
[30] Liang Wang, Hyojoon Kim, Prateek Mittal, and Jennifer Rexford. Programmable In-Network Obfuscation of Traffic. arXiv preprintarXiv:2006.00097 (2020).
[31] Trisha Datta, Nick Feamster, Jennifer Rexford, and Liang Wang. SPINE: Surveillance Protection in the Network Elements. In Proceedings of USENIX Workshop on Free and Open Communications on the Internet (FOCI 2019).
[32] Martim Francisco, Bernardo Ferreira, Fernando Ramos, Eduard Marin and Salvatore Signorello. P4Chaskey: An Efficient MAC Algorithm for PISA Switches. In Proceedings of 7th European P4 Workshop (EuroP4 2024)
[33] Tushar Swamy, Alexander Rucker, Muhammad Shahbaz, Ishan Gaur, and Kunle Olukotun. Taurus: A Data Plane Architecture for per-Packet ML. In Proceedings of the ACM International Conference on Architectural Support for Programming Languages and Operating Systems (ASPLOS 2022). pp. 1099-1114.

## Claims

1. A method for securely and efficiently measuring available bandwidth of network paths of an SDN-based network, the latter comprising a SDN controller and a plurality of programmable network devices, a communication channel between the SDN controller and the programmable network devices adopting a Transport Layer Security, TLS, protocol, the method comprising:
including a bandwidth monitoring element on the SDN controller or on one of the plurality of programmable network devices of the SDN-based network;
executing, by one of the bandwidth monitoring elements, within a measurement round, a real-time available bandwidth measurement of a given network path between two of the plurality of programmable devices by:
embedding a security mechanism into probing packets shared between the two programmable network devices based on a data plane protocol relying on cryptographic methods; and
measuring, in a local control plane of one of the two programmable network devices or in a global control plane, the available bandwidth of the network path by considering reception time-based information of the probing packets using a single clock.

2. The method of claim 1, wherein artificially created probing packets are further injected into the network path if the probing packets are insufficient for the available bandwidth measurement.

3. The method of claim 2, further comprising signaling the probing packets and the artificially created probing packets with a given tag or mark.

4. The method of any one of the previous claims, wherein the data plane protocol relies on a cryptographic Message Authentication Code, MAC, function.

5. The method of claim 4, wherein the cryptographic MAC function is based on the Chaskey algorithm.

6. The method of claim 4 or 5, further comprising computing a unique MAC for each probing packet sent within the measurement round.

7. The method of claim 4 or 5, wherein the cryptographic MAC function is computed offload from a processing unit of one of the two programmable network devices.

8. The method of any one of the previous claims, wherein:
the bandwidth monitoring element that executes the real-time available bandwidth measurement is included in a receiver programmable network device of the two programmable network devices, the other programmable network device acting as sender programmable device;
the sender programmable network device and the receiver programmable network device share a symmetric cryptographic key that is only known by them,
the sender programmable network device includes several headers to each probing packet sent, the several headers comprising: (i) a Nround, (ii) a Npacket, (iii) a programmable network device ID, and (iv) a MAC tag indicating a result of having computed a cryptographic MAC function using the cryptographic key shared over a packet's payload, Nround, Npacket and programmable network device ID, and
the execution of the measurement round comprises:
upon reception of each probing packet: verifying that Nround is greater than a value from a previous real-time available bandwidth measurement round and that Npacket is greater than a last received probing packet, using the programmable network device ID for identifying the shared cryptographic key, and validating the MAC tag using the shared cryptographic key; and
upon successful validation, recording the reception time-based information of the probing packets, and once the measurement round is completed further forwarding the recorded reception time-based information to the local control plane for carrying out the measurement of the available bandwidth,
wherein the receiver programmable network device further transmits the measured available bandwidth to the sender programmable network device using the shared cryptographic key.

9. The method of any one of the previous claims 1-7, wherein:
the bandwidth monitoring element that executes the real-time available bandwidth measurement is included in a sender programmable network device of the two programmable network devices, the other programmable network device acting as receiver programmable device;
the sender programmable network device and the receiver programmable network device share a cryptographic key that is only known by them;
the sender programmable network device includes several headers to each probing packet sent, the several headers comprising: (i) a Nround, (ii) a Npacket, (iii) a programmable network device ID, and (iv) a MAC tag indicating a result of having computed a cryptographic MAC function using the cryptographic key shared over a packet's payload, Nround, Npacket and programmable network device ID, and
the execution of the measurement round comprises:
sending a challenge to the receiver programmable network device, the challenge enforcing the receiver programmable network device to perform a cryptographic operation on the challenge using the shared cryptographic key;
receiving a response to said challenge from the receiver programmable network device;
upon successful validation of the authenticity of the response, recording the reception time-based information of the probing packets for further processing in the local control plane.

10. The method of any one of the previous claims 1-7, wherein:
the bandwidth monitoring element that executes the real-time available bandwidth measurement is included in the SDN controller;
a sender programmable network device of the two programmable network devices and a receiver programmable network device of the two programmable network devices each possess a cryptographic key, that is only shared with the SDN controller; and
the execution of the measurement round comprises:
sending a measurement process initiating request to the sender programmable network device, and further receiving confirmation from the sender programmable network device;
forwarding a plurality of parameters including a cryptographic seed for initializing a deterministic packet generation process and a PacketCount for specifying the number of probing packets to be generated and transmitted within the measurement round to the sender programmable network device,
wherein the sender programmable network device upon reception of the plurality of parameters forwards the probing packets together with several headers attached thereto to the receiver programmable device, the several headers comprising: (i) a Nround, (ii) a Npacket, (iii) a programmable network device ID, and (iv) a MAC tag indicating a result of having computed a cryptographic MAC function using the cryptographic key, Nround, Npacket and programmable network device ID;
receiving, from the receiver programmable network device, for each probing packet the receiver programmable network device has received from the sender programmable network device, the Nround, Npacket, and result of the cryptographic MAC function;
extracting the reception time-based information of each probing packet and validating integrity and authenticity of each probing packet using the MAC tag and the cryptographic key of the sender programmable network device.

11. A system for securely and efficiently measuring available bandwidth of network paths of an SDN-based network, comprising:
a plurality of programmable network devices;
a SDN controller configured to communicate with the plurality of programmable network devices using a Transport Layer Security, TLS, protocol; and
a bandwidth monitoring element disposed on the controller or on one of the plurality of programmable network devices;
wherein the bandwidth monitoring element is configured to execute, within a measurement round, a real-time available bandwidth measurement of a given network path between two of the plurality of programmable devices by:
embedding a security mechanism into probing packets shared between the two programmable network devices based on a data plane protocol relying on cryptographic methods; and
measuring, in a local control plane of one of the two programmable network devices or in a global control plane, the available bandwidth of the given network path by considering reception time-based information of the probing packets using a single clock.

12. The system of claim 11, wherein the programmable network devices comprise P4-programmable network devices.

13. The system of claim 12, comprising P4-programmable switches or SmartNICs.

14. A non-transitory computer readable medium including code instructions that when executed in a computer device implement the steps of the method of any of the previous claims 1 to 10.
